# EUROPÄISCHE PATENTSCHRIFT

(11) **EP 0 807 782 B1**
(45) Veröffentlichungstag und Bekanntmachung des Hinweises auf die Patenterteilung: **23.05.2001**
(21) Anmeldenummer: 97106036.3
(22) Anmeldetag: 12.04.1997
(51) Int. Cl.: F16L 37/14, F16L 21/02, F16L 21/08

(54) **Rohrverbindung**
Pipe joint
Raccord de tuyaux

(30) Priorität: 14.05.1996 DE 29608706 U
(43) Veröffentlichungstag der Anmeldung: 19.11.1997
(73) Patentinhaber: REHAU AG + Co, 95111 Rehau (DE)
(72) Erfinder: Eckert, Robert, 95111 Rehau (DE)

(56) Entgegenhaltungen:
- EP-A- 0 438 296
- EP-A- 0 556 545
- DE-A- 1 525 525
- DE-A- 3 814 913
- US-A- 4 293 148

## Beschreibung

Die Erfindung betrifft eine Rohrverbindung zweier Vortriebsrohre oder dergleichen gemäß dem Oberbegriff von Anspruch 1 .

Eine gattungsgemäße Rohrverbindung zweier Vortriebsrohre ist durch die DE 38 14 913 C2 bekannt. Bei dieser Verbindung ist die axiale Länge des abgestuften Bereichs des Steckendes kürzer als die axiale Länge des abgestuften Bereichs des Muffenendes. In die dadurch gebildete Öffnung ist bei zusammengesetzten Rohrteilen das Dichtelement eingelassen, welches einerseits seitlich vom freien Ende des Steckendes und andererseits von der Anlageschulter des Muffenendes eingeschlossen ist. Diese Lage des Dichtringes hat zur Folge, daß beim Zusammenführen von Muffenende und Steckende der Dichtring axial so weit komprimiert werden muß, bis die Aufnahmenuten für das Sperrelement deckungsgleich übereinanderliegen. Dazu sind - je nach auftretenden Toleranzen - mitunter hohe axiale Presskräfte erforderlich, die nicht in jeder Lage aufgebracht werden können. Auch führte die spezielle Lage der Dichtung schon bei relativ großen Biegeradien zu Undichtigkeiten in der Verbindung der beiden Rohrteile, die beim Einsatz als wasserführende Rohrleitung nicht toleriert werden konnten.

Hier setzt die Erfindung ein, die es sich zur Aufgabe gestellt hat, die hohen Verpresskräfte bei nach dem Stand der Technik zusammengesetzten Rohrteilen entscheidend zu reduzieren und die Dichtigkeit der geschaffenen Rohrverbindung zwischen zwei Vortriebsrohren zu erhöhen.

Diese Aufgabe wird durch die Merkmale von Anspruch 1 gelöst. Die Vorteile dieser Ausführungsform werden in erster Linie darin gesehen, daß die beiden zusammenzufügenden Rohrteile ohne mechanische Hilfsmittel per Hand so weit zusammengesteckt werden können, daß die Aufnahmenuten für das Sperrelement deckungsgleich übereinander liegen, und daß der als Sperrelement dienende Verriegelungsstab ohne weitere Hilfsmittel über die Rohröffnung in die durch die Aufnahmenuten gebildete Aufnahmekammer eingeschoben werden kann.

Darüber hinaus wird aufgrund der Funktionsweise der erfindungsgemäßen Lippendichtung die Dichtigkeit des Systems auch bei erheblich kleineren Biegeradien beibehalten, als sie beim Stand der Technik noch zulässig waren.

Ein weiterer wesentlicher Vorteil gegenüber dem Stand der Technik wird darin gesehen, daß der abgestufte Bereich des Steckendes und der abgestufte Bereich des Muffenendes in ihrer jeweiligen axialen Länge gleichgehalten sind, d.h. daß der eine Bereich nicht mehr kürzer gehalten ist als der andere, um das Dichtelement einsetzen zu können. Diese neue Gestaltungsweise von Muffenende und Spitzende erlaubt ein gegenseitiges Abstützen in der erfindungsgemäßen Verbindung, wodurch die axiale Druckbelastung gegenüber der Verbindung nach dem Stand der Technik um ca. 50% erhöht werden kann.

Die gegenseitige Abstützung zwischen Muffenende und Steckende stabilisiert den Verbindungsbereich der beiden Rohrteile und führt damit zu einer Erhöhung der Dichtungsstabilität beim Bohrvortrieb. Bei einer Zugbelastung entwickelt diese neue Verbindungsform dagegen ihre maximale Flexibilität. Diesem Vorteil dient auch die Übergreifung des lichten Aufnahmeraums der Nut durch den Endbereich der weiteren Abstufung des Steckendes.

Es hat sich als zweckmäßig erwiesen, daß der Lippendichtring mit seiner flexiblen Lippe zur weiteren Abstufung im abgestuften Bereich des Steckendes ausgerichtet ist. Auf diese Weise entwickelt die Dichtungslippe beim Zusammenstecken von Steckende und Muffenende ihre höchste Dichtwirkung.

Es hat sich weiter als vorteilhaft erwiesen, daß in die Öffnung der Aufnahmekammer zur Sicherung der Verbindungslage des Sperrelementes ein Verriegelungsstück eingesetzt ist, welches in form- oder kraftschlüssiger Verbindung in seinem Verriegelungssitz in der Öffnung gehalten ist. Hierbei ist ausschlaggebend, daß Vortriebsrohre in der Regel im Bohrvortrieb verlegt werden. Dabei werden die Rohre von einer Startgrube ausgehend in den anstehenden Boden vorgepresst, wobei gleichzeitig eine im Rohr rotierende Förderschnecke das Erdreich von der Stirnseite des Rohrverbundes in die Startgrube abfördert. Dabei hat die Förderschnecke im Rohr ein gewisses Spiel gegenüber dem Rohrinnendurchmesser und es kann beispielsweise bei der Verklemmung von Steinen in diesem Spielbereich zur Rotation einzelner Rohrabschnitte im Rohrverbund kommen. Diese Rotationsmöglichkeit ist gewollt, da aufgrund der hohen auftretenden Drehmomente eine nicht drehbare Verbindung an der schwächsten Stelle, nämlich in den Steckbereichen, brechen würde.

Diese gewollte Rotation einzelner Rohrteile führt dazu, daß der Verriegelungsstab tangential aus der Einführungsöffnung mehr und mehr herausgeschoben wird. Die Kräfte, die dazu führen, resultieren aus der Reibung des Verriegelungsstabes im Nutengrund zwischen Spitzende und Muffe. Wenn der Verriegelungsstab nicht mehr als Sperrelement zwischen Muffe und Steckende zweier Rohrteile wirken kann, ist die Rohrverbindung in diesem Bereich nicht mehr zugkraftschlüssig und es können sich einzelne Rohrteile während des Einziehens separieren. Auch beim Bohrvortrieb ergeben sich in diesem Fall Schwachpunkte in der Druckbelastung der Verbindung, da das verriegelte gegenseitige Abstützen von Muffe und Spitzende nicht mehr gewährleistet ist. Bei verfahrensbedingten Zugbelastungen können sich außerdem die Rohre bei nicht mehr gewährleisteter, längskraftschlüssiger Verriegelung separieren.

Gegen den geschilderten Nachteil schafft das erfindungsgemäße Verriegelungsstück Abhilfe, welches sich aufgrund seiner geometrischen Form durch eine Presspassung oder mittels kraftschlüssiger Verbindung in die Einführöffnung des Verriegelungsstabes einsetzen läßt und auf diese Weise das Herausdrehen des Verriegelungsstabes beim Vortrieb verhindert. Das Verriegelungsstück kann dabei in verschiedenen geometrischen Formen durch Rasterungen, Nasen oder Riefungen mit dem Profil 1 der Einführungsöffnung eine formschlüssige Verbindung eingehen, wodurch die Lage des Verriegelungsstabes in jeder Lage gesichert wird.

Das Verriegelungsstück kann auch aus elastischem Material gestaltet sein und eine kraftschlüssige Verbindung mit dem Umfang der Rohrwandöffnung eingehen, wobei das Verriegelungsstück in der Rohrwandöffnung gestaucht wird. Hierbei können alle denkbaren elastischen Materialien eingesetzt werden, z.B. Polyethylen oder eine Gummimischung, die aber für die geforderte Lagesicherheit eine hohe Shore-A-Härte von wenigstens 60 aufweisen muß.

In jedem Fall muß sich die Form des Verriegelungsstückes an der Form der vorhandenen Rohrwandöffnung für den als Sperrelement eingesetzten Verriegelungsstab orientieren. So kann bei dickwandigen Rohren der Querschnitt der Rohrwandöffnung für den Verriegelungsstab rund sein oder ein Rechteckprofil aufweisen. Bei dünneren Rohrwänden bieten sich für die tangentiale Rohrwandöffnung schlitzförmige Gestaltungsformen an, die dann entsprechend geformte Verriegelungsstücke erfordern.

In der Zeichnung sind Ausführungsbeispiele der erfindungsgemäßen Rohrverbindung schematisch dargestellt; es zeigt:
Fig. 1 einen Schnitt durch die Rohrverbindung mit Steckende und Muffenende.
Fig. 2 eine Draufsicht auf die Rohrwandöffnung mit Verriegelungsstück.
Fig. 3 einen Schnitt durch die Rohrwandöffnung gemäß Fig. 2.

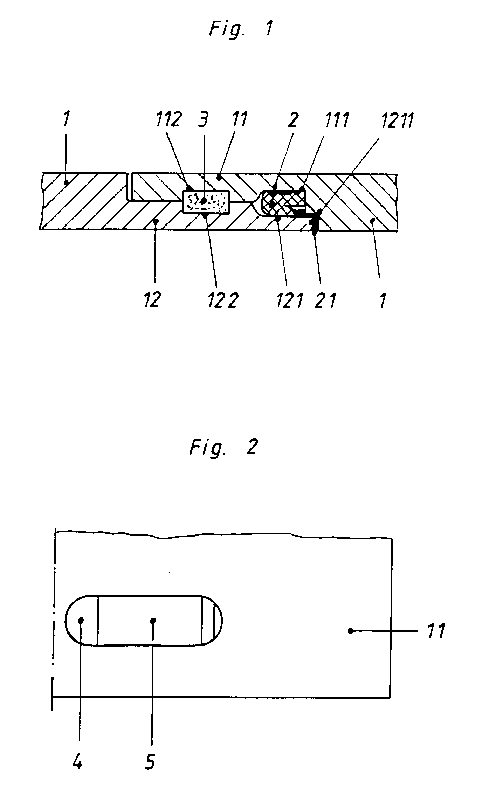

Fig. 1 zeigt den Schnitt durch die Verbindung der beiden Rohre 1 mit dem abgestuften Bereich des Steckendes 12 und dem entsprechend abgestuften Bereich des Muffenendes 11. Der abgestufte Bereich des Steckendes 12 besitzt an seinem freien Ende eine weitere Abstufung 121, welche in ihrer Tiefe der Tiefe der Aufnahmenut 122 für das Sperrelement entspricht. In dem der weiteren Abstufung 121 gegenüberliegenden Wandbereich des Muffenendes 11 ist eine der Tiefe der weiteren Abstufung 121 entsprechende Nut 111 eingelassen. Der lichte Aufnahmeraum der Nut 111 ist in der gezeigten Darstellung vom Endbereich 1211 der weiteren Abstufung 121 des Steckendes 12 übergriffen. In die Nut 111 des Muffenendes 11 ist der Lippendichtring 2 eingesetzt. Der Lippendichtring 2 ist so ausgerichtet, daß er mit seiner flexiblen Lippe 21 zur weiteren Abstufung 121 im abgestuften Bereich des Steckendes 12 ausgerichtet ist. Der Aufnahmenut 122 im Steckende 12 gegenüberliegend ist eine entsprechende Aufnahmenut 112 im abgestuften Bereich des Muffenendes 11 eingeformt. In die durch die Aufnahmenuten 112, 122 gebildete Aufnahmekammer ist das Sperrelement 3 eingesetzt, wodurch die Verbindung zwischen den beiden Rohren 1 verriegelt ist.

In Fig. 2 ist im Teilschnitt die Draufsicht auf die Rohrwandöffnung 4 im Bereich des abgestuften Muffenendes 11 dargestellt. Die Rohrwandöffnung 4 ist in der gezeigten Darstellung eine Art Langloch, welches die durch die Aufnahmenuten 112, 122 gebildete Aufnahmekammer für das Sperrelement 3 mit der Außenatmosphäre verbindet. Über die Rohrwandöffnung 4 wird das Sperrelement 3 in die durch die Aufnahmenuten 112, 122 gebildete Aufnahmekammer eingeschoben. Nach diesem Einschieben wird die Rohrwandöffnung 4 wenigstens teilweise durch das Verriegelungsstück 5 verschlossen. Das Verriegelungsstück 5 verhindert das Austreten des Sperrelementes 3 aus seinem Verriegelungssitz in der durch die Aufnahmenuten 112, 122 gebildeten Aufnahmekammer durch Vibration oder Rotation von einzelnen Rohren bei der Verlegung.

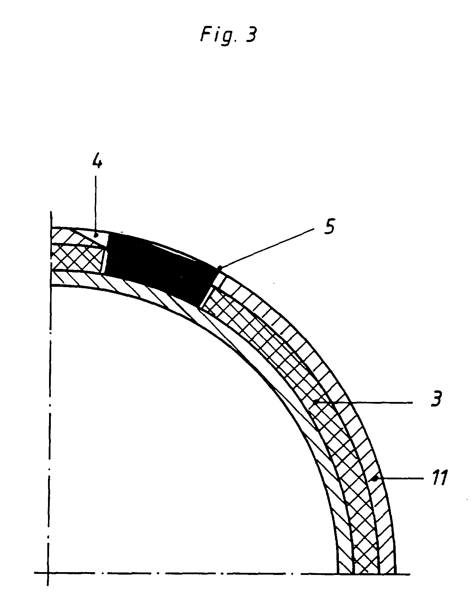

Fig. 3 zeigt den Schnitt durch die Rohrwandöffnung 4 gemäß Fig. 2. In die Rohrwandöffnung 4 ist das Verriegelungsstück 5 eingelassen, so daß das Sperrelement 3 durch Vibration oder Rotation der Rohre 1 nicht mehr aus seinem Sitz in der Aufnahmekammer heraustreten kann.

## Patentansprüche

1. Rohrverbindung zweier Vortriebsrohre (1) oder dergleichen, bei der bei zusammengesetzten Rohren (1) ein auf einer Seite des einen Rohres (1) ausgebildetes Steckende (12) in ein auf einer Seite des zweiten Rohres ausgebildetes Muffenende (11) eingreift, wobei am Steckende (12) bzw. am Muffenende (11) die Wandstärke der Rohre (1) durch eine radial nach innen bzw. radial nach außen abgesetzte Stufe reduziert ist und die Stufenhöhe der Stufe am Steckende (12) mit der Stufenhöhe der Stufe am Muffenende (11) übereinstimmt, wobei bei zusammengesetzten Rohren (1) zwischen dem freien Ende des Steckendes (12) und dem benachbarten Bereich des Muffenendes (11) ein flexibles Dichtelement eingesetzt ist, wobei mit Abstand vom freien Ende des Steckendes (12) und mit Abstand vom freien Ende des Muffenendes (11) am äußeren Umfang des Steckendes (12) und am inneren Umfang des Muffenendes (11) jeweils eine Aufnahmenut (112, 122) zur Bildung einer Aufnahmekammer eingelassen ist, wobei in die durch die Aufnahmenuten (112, 122) gebildete Aufnahmekammer bei zusammengesetzten Rohren (1) ein über eine Rohrwandöffnung (4) von außen eingesetztes Sperrelement (3) eingelassen ist, wobei der abgestufte Bereich des Steckendes (12) an seinem freien Ende eine weitere Abstufung (121) aufweist, welche in ihrer Tiefe der Aufnahmenut (122) entspricht und dass in dem der Abstufung (121) gegenüberliegenden Wandbereich des Muffenendes (11) eine Nut (111) eingelassen ist,
dadurch gekennzeichnet,
dass die Tiefe der Abstufung (121) der der Nut (111) entspricht, dass der abgestufte Bereich des Steckendes (12) und der abgestufte Bereich des Muffenendes (11) in ihrer jeweiligen axialen Länge gleichgehalten sind, so dass sich das Muffenende (11) und das Steckende (12) gegenseitig abstützen, dass bei zusammengesetzten und in bekannter Weise durch das Sperrelement (3) verbundenen Rohren (1) die Nut (111) annähernd gegenüber der am freien Ende des abgestuften Bereiches des Steckendes (12) beginnenden Abstufung (121) positioniert ist und dass in den so geschaffenen Aufnahmeraum ein Lippendichtring (2) eingesetzt ist.

2. Rohrverbindung nach Anspruch 1, dadurch gekennzeichnet, dass der Endbereich (1211) der Abstufung (121) des'abgestuften Bereiches des Steckendes (12) den lichten Aufnahmeraum der Nut (111) überdeckt.

3. Rohrverbindung nach Anspruch 1, dadurch gekennzeichnet, dass der Lippendichtring (2) in der Nut (111) des abgestuften Bereiches des Muffenendes (11) eingesetzt ist und dass die flexible Lippe (21) parallel zur Abstufung (121) des abgestuften Bereiches des Steckendes (12) ausgerichtet ist.

4. Rohrverbindung nach Anspruch 1, dadurch gekennzeichnet, dass in die Rohrwandöffnung (4) zur Sicherung der Verbindungslage des Sperrelementes (3) ein Verriegelungsstück (5) eingesetzt ist, weiches in form- oder kraftschlüssiger Verbindung in seinem Verriegelungssitz in der Rohrwandöffnung gehalten ist.

## Claims

1. A pipe connection of two auger-boring pipes (1) or the like, whereby with assembled pipes (1), one end of one of the pipes (1) designed as a spigot end (12) engages in one end of the other pipe designed as a socket end (11), wherein the pipe (1) wall thickness at both the spigot end (12) and the socket end (11) is reduced by a down step of the radius, inwardly or outwardly, respectively, and the height of the step at the spigot end (12) conforms to that of the step at the socket end (11); a flexible sealing element is installed between the open end of the spigot end (12) and the adjacent region of the socket end (11) when the pipes (1) are assembled; a receiving groove (112, 122) is recessed into the external perimeter of the spigot end (12) and into the inner perimeter of the socket end (11) at a distance from the open ends of the spigot end (12) and socket end (11), respectively, to form a receiving chamber; a sealing element (3) inserted externally via a pipe wall aperture (4) is installed into the receiving chamber formed by the receiving grooves (112, 122) when the pipes (1) are assembled; the stepped-down region of the spigot end (12) has an additional down step (121) on its open end, the depth of which corresponds to that of the receiving groove (122) and a groove (111) is recessed in the wall region of the socket end (11) facing the down step (121). Said pipe connection is characterized in that, the depth of the down step (121) corresponds to that of the groove (111), the axial length of the stepped-down region of the spigot end (12) is equal to that of the socket end (11), so that socket end (11) and spigot end (12) mutually support each other when the pipes (1) are assembled and connected in the known manner via the sealing element (3), the groove (111) is positioned approximately opposite the down step (121) that starts at the open end of the stepped-down region of the spigot end (12) and that a lip sealing ring (2) is installed in the receiving chamber so formed.

2. A pipe connection according to Claim 1 characterized in that the end region (1211) of the down step (121) of the stepped-down region of the spigot end (12) covers the open receiving chamber of the groove (111).

3. A pipe connection according to Claim 1 characterized in that the lip sealing ring (2) is installed in the groove (111) of the stepped-down region of the socket end (121) and that the flexible lip (21) is disposed parallel to the down step (121) of the stepped-down region of the spigot end (12).

4. A pipe connection according to Claim 1 characterized in that a locking element (5) is installed in the pipe wall aperture (4) to secure the connection position of the sealing element (3), said locking element being held in place in its locking position in the pipe wall aperture by matching or frictional engagement.

## Revendications

1. Jonction de deux tubes de forage (1) ou similaires, un bout mâle de l'un des tubes (1) s'insérant dans le bout femelle (11) du deuxième tube, l'épaisseur de paroi des tubes (1) au niveau du bout mâle (12) et du bout femelle (11) étant réduit par un décrochement étagé radialement vers l'intérieur ou radialement vers l'extérieur et la hauteur de décrochement du bout mâle (12) correspondant à la hauteur de décrochement du bout femelle (11), un élément d'étanchéité flexible étant monté lorsque les tubes sont assemblés (1) entre l'extrémité libre du bout mâle (12) et le bout femelle (11) contigu, une rainure de logement (112, 122) se trouvant respectivement à distance de l'extrémité libre du bout mâle (12) et à distance de l'extrémité libre du bout femelle (11), sur le pourtour extérieur du bout mâle (12) et sur le pourtour intérieur du bout femelle (11) pour former une chambre, un élément de blocage (3) étant placé de l'extérieur par un orifice de la paroi (4) dans la chambre formée par les rainures de logement (112, 122) lorsque les tubes sont assemblés, la partie étagée du bout mâle (12) présentant à son extrémité libre un autre décrochement (121), dont la profondeur correspond à la rainure de logement (122), une rainure (111) se trouvant dans la partie de la paroi du bout femelle (11) opposée au décrochement (121),
caractérisée en ce que
la profondeur du décrochement (121) corresponde à la rainure (111), que la partie étagée du bout mâle (12) et la partie étagée du bout femelle (11) soient à même niveau axialement, de façon à ce que le bout mâle (12) et le bout femelle (11) se supportent mutuellement, que lorsque les tubes (1) sont montés et assemblés par l'élément de blocage (3) selon la méthode décrite, la rainure (111) est positionnée approximativement à l'opposé du décrochement (121) commençant à l'extrémité libre de la partie étagée du bout mâle (12) et qu'un joint à lèvre (2) est monté dans l'espace ainsi créé.

2. Jonction de tubes selon la revendication 1, caractérisée en ce que l'extrémité (1211) du décrochement (121) de la partie étagée du bout mâle (12) recouvre le logement libre de la rainure (111).

3. Jonction de tubes selon la revendication 1, caractérisée en ce que le joint à lèvre (2) est logé dans la rainure (111) de la partie étagée du bout mâle (11) et que la lèvre flexible (21) est parallèle au décrochement (121) de la partie étagée du bout mâle (12).

4. Jonction de tubes selon la revendication 1, caractérisée en ce qu'une pièce de verrouillage (5) est placée dans l'orifice de la paroi du tube (4), pour assurer la position de l'élément de blocage (3), la pièce de verrouillage étant maintenue dans sa position par blocage dans l'orifice de la paroi.
